# FASCICULE DE BREVET EUROPEEN

(11) **EP 0 685 752 B1**
(45) Date de publication et mention de la délivrance du brevet: **08.08.2001**
(21) Numéro de dépôt: 95401141.7
(22) Date de dépôt: 17.05.1995
(51) Int. Cl.: G02B 13/10, G02B 5/04, H04N 3/09

(54) **Optique pour système de veille aérienne**
Optik für Luftüberwachungssystem
Optics for aerial surveillance system

(30) Priorité: 02.06.1994 FR 9406747
(43) Date de publication de la demande: 06.12.1995
(73) Titulaire: SAGEM SA, 75116 Paris (FR)
(72) Inventeur: Lacuve, Jean, F-75625 Paris Cédex 13 (FR)
(74) Mandataire: Bloch, Gérard

(56) Documents cités:
- EP-A- 0 256 826
- EP-A- 0 378 886
- GB-A- 2 148 533
- GB-A- 2 187 301

## Description

Pour assurer la protection d'un site contre une attaque d'aéronef, on utilise des dispositifs de veille passifs fonctionnant en général dans l'infrarouge et des systèmes actifs de type radar.

Pour retarder sa détection, un aéronef s'approchant du site effectue une approche à très basse altitude lui permettant de rester le plus longtemps possible sous l'horizon ou juste au-dessus, à angle de site quasiment nul. Dans ces conditions, les systèmes à radar sont fortement parasités et la détection par radar est quasiment imposible.

Les systèmes de veille IR ne présentent pas ce défaut. Toutefois, ils ont une couverture angulaire en site faible de l'ordre de quelques degrés. Les systèmes de veille IR actuellement disponibles comportent une optique collimatrice fournissant, à une barrette de détecteurs ponctuels, l'image d'une bande verticale, correspondant aux faibles angles de site, de la scène, surveillée en totalité par un balayage en azimut.

Pour être détectée, l'image de l'aéronef doit être sensiblement de la taille d'un détecteur. Afin de disposer d'une portée maximale pour un angle de site nul, l'optique est de distance focale élevée, c'est-à-dire qu'elle effectue un fort grossissement de l'image de la scène projetée sur la barrette. Cependant, ce grossissement est effectué au détriment de l'ouverture angulaire de la scène, c'est-à-dire que le système de veille présente, en site, une ouverture angulaire limitée. Une juxtaposition de plusieurs barrettes bout-à-bout est hors de question du fait de son coût.

L'aéronef est donc bien détecté au voisinage de l'horizon, même à distance élevée, mais son image est rapidement perdue dès qu'il s'approche du système de veille car son angle de site s'accroît et dépasse l'ouverture angulaire limitée du champ de détection.

La présente invention vise à accroître l'ouverture angulaire du champ de l'optique d'un système de veille tout en conservant un grossissement élevé dans une direction particulière, en pratique l'horizon. Un tel système est connu, par exemple, de GB 2 148 533.

A cet effet, l'invention concerne une optique pour système de veille aérienne selon la revendication 1.

Ainsi, au lieu de tenter de corriger la distorsion parasite créée habituellement par les optiques, on utilise, au contraire, une optique créant une distorsion importante afin de régler le grossissement, donc la définition, en tout point de l'image. On peut utiliser une barrette de détecteurs, tous identiques, du commerce puisque c'est l'optique qui adapte la taille des taches à détecter à celle des détecteurs ponctuels, et non l'inverse.

Pour reprendre l'exemple de la veille contre avions, l'ouverture angulaire d'une partie du champ de réception, couvrant les angles de site les plus élevés, peut être accrue en diminuant le grossissement. La portée de détection à angle de site plus élevé est alors réduite mais cela ne présente pas d'inconvénient puisque l'avion est proche et que le reste du champ, couvrant l'horizon, conserve un grossissement élevé permettant une détection à longue portée. D'autre part, la transmission atmosphérique oblique IR est meilleure que la transmission horizontale (à partir du sol).

L'invention sera mieux comprise à l'aide de la description suivante de la forme de réalisation préférée de l'optique de l'invention, en référence au dessin annexé, sur lequel :
- la figure 1 est une représentation schématique de l'optique de l'invention et
- la figure 2 illustre la variation du grossissement de l'image transmise par cette optique.

L'optique représentée comporte ici, et selon le sens du rayonnement à recevoir, un système afocal 1, un prisme 2, un collimateur 3 et une barrette de détecteurs 4 disposée dans le plan focal du collimateur 3.

Le système afocal 1 crée un grossissement angulaire, ici G = 4, de sorte que le rayonnement attaque le prisme 2 avec un champ de plus grande ouverture, ici 60 degrés pour un champ observé de 15 degrés. Cela évite de prévoir un prisme d'angle au sommet très faible. Les rayons traversant le prisme 2 subissent une déviation qui est fonction de la valeur de leur angle d'incidence sur le prisme 2. L'orientation du prisme 2, la valeur de son angle au sommet et son indice de réfraction déterminent la modulation de déflexion apportée par le prisme 2 aux rayons frappant la barrette 4. Le grossissement varie ainsi avec la position angulaire de chaque rayon incident dans le champ observé, c'est-à-dire avec la position des aéronefs à détecter.

Pour fixer les idées, et à titre d'exemple, la demanderesse a réalisé une optique dans laquelle le champ des rayons issus du prisme 2 a une ouverture angulaire d'environ 30 degrés et le collimateur 3 a une distance focale f = 85/G (G = 4).

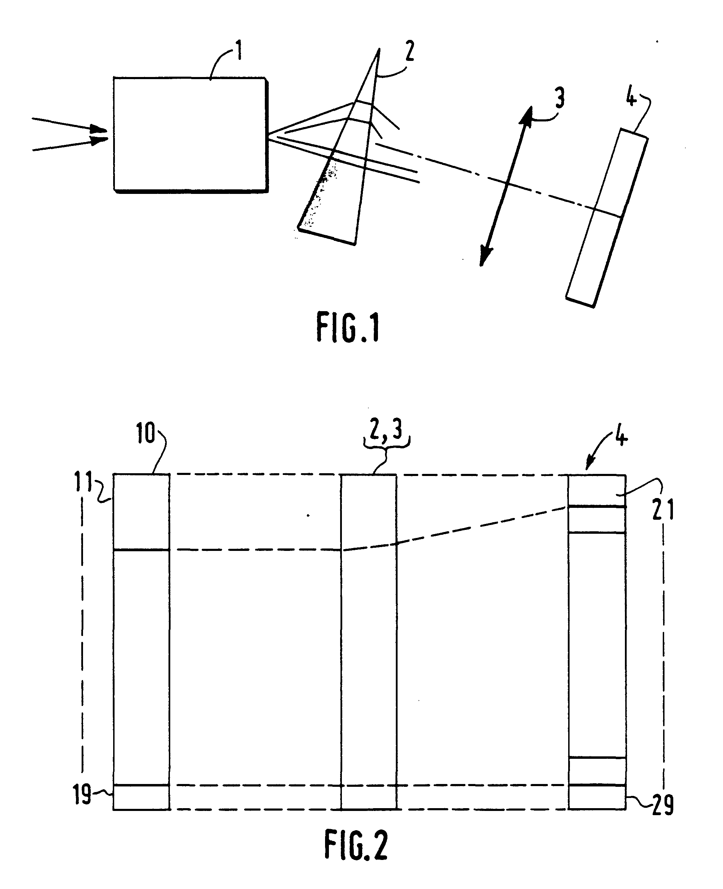

Sur la figure 2, on a représenté l'image fictive 10 de la barrette de détecteurs 4 projetée sur la bande de la scène observée, afin d'illustrer la variation du grossissement apportée par le prisme 2.

La barrette 4 comporte ici des détecteurs 21 - 29 de mêmes tailles et leurs images 11 - 19 projetées sur la scène, et constituant la bande observée 10, présentent des tailles croissant en site. Dans cet exemple, le détecteur 21 situé à une extrémité de la barrette 4 a un champ d'observation 11 dilaté, de 1 mrd (milliradian), correspondant à une portée réduite pour les angles de site élevés, tandis que le détecteur 29, à l'autre extrémité de la barrette 4, a un champ limité de 0,33 mrd et correspond donc à une grande portée.

Ainsi, l'optique présente une pupille de taille variant dans le même sens que la portée et dans le sens opposé à celui de la variation de la taille angulaire des champs élémentaires 11 - 19.

Le prisme 2 peut être remplacé par un élément équivalent, par exemple une lentille cylindrique ou un assemblage de plusieurs prismes et/ou de plusieurs lentilles cylindriques.

L'optique ci-dessus peut être utilisée dans tout système de veille aérienne pour lequel on souhaite une sensibilité de détection présentant un maximum dans une direction particulière.

## Revendications

1. Optique pour système de veille aérienne, comportant des moyens optiques (1 - 3) pour recevoir le rayonnement d'un aéronef dans un champ de réception et le transmettre à des moyens détecteurs (4), caractérisée par le fait que les moyens optiques de réception (1 - 3) comportent une première partie afocale (1), une deuxième partie, avec au moins un prisme (2) ou une lentille cylindrique, et une troisième partie collimatrice (3), les premières et deuxièmes parties de ces moyens optiques étant agencées pour appliquer au rayonnement un grossissement angulaire variable avec la position angulaire de l'aéronef dans le champ.

2. Optique selon la revendication 2, dans laquelle le grossissement angulaire de la partie afocale (1) est fixe.

## Claims

1. Optics for aerial surveillance system, including optical means (1-3) for receiving the radiation from an aircraft in a field of reception and transmitting it to detector means (4), characterised by the fact that the optical reception means (1-3) include a first afocal part (1), a second part, with at least one prism (2) or a cylindrical lens, and a third collimating part (3), the first and second parts of these optical means being arranged so as to apply to the radiation angular magnification variable with the angular position of the aircraft in the field.

2. Optics according to claim 1, in which the angular magnification of the afocal part (1) is fixed.

## Patentansprüche

1. Optik für Luftüberwachungssystem, umfassend Optikmitteln (1-3) zum Empfangen der Strahlung eines Luftfahrzeugs in einem Empfangsbildfeld und Weiterleiten an Detcktiermittel (4), dadurch gekennzeichnet, daß die optischen Empfangsmittel (1-3) einen ersten afokalen Bestandteil (1), einen zweiten Bestandteil mit mindestens einem Prisma (2) oder einer zylinderischen Linse und einen dritten kollimierenden Bestandteil (3) umfassen, wobei der erste und der zweite Bestandteil dieser Optikmittel so angeordnet sind, um eine angulare Vergrößerung, die in Abhängigkeit von der angularen Position des Luftfahrzeugs im Bildfeld variabel ist, an die Strahlung anzulegen.

2. Optik nach Anspruch 1, dadurch gekennzeichnet, daß die angulare Vergrößerung des afokalen Bestandteils (1) feststehend ist.
